# EUROPEAN PATENT APPLICATION

(11) **EP 1 903 278 A1**
(43) Date of publication of application: **26.03.2008**
(21) Application number: 06780837.8
(22) Date of filing: 06.07.2006
(51) Int. Cl.: F21V 29/00, F21V 29/02, G03B 21/14, F21Y 101/02

(54) **LIGHT SOURCE DEVICE AND PROJECTOR**

(30) Priority: 12.07.2005 JP 2005202801
(71) Applicant: Olympus Corporation, Tokyo 151-0072 (JP)
(72) Inventor: SUEOKA, Yoshiaki, 1910024 Tokyo (JP)
(74) Representative: von Hellfeld, Axel
(86) International application number: PCT/JP2006/313511
(87) International publication number: WO 2007/007647

(57) **Abstract**

Provided is a light source apparatus for illuminating an illumination area via an illumination optical part, including a plurality of light sources for emitting illumination light; one heat-absorbing member for absorbing heat which the plurality of light sources generates; a heat-radiating part for radiating the heat; and a heat-transporting part thermally connected to the heat-absorbing member and the heat-radiating part; wherein the heat-transporting part is formed of a tube member containing a refrigerant for transmitting the heat and is provided at a position shifted from an irradiation position of the illumination light.

## Description

### Technical Field

The present invention relates to a light source apparatus having a plurality of light sources and to a projector provided with such a light source apparatus.

### Background Art

In the related art, methods have been proposed for radiating heat generated in light sources used in projectors and so forth. For example, in a projector using an ultra-high-pressure mercury lamp as the light source, a method has been proposed in which a plurality of heat pipes having heat-radiating fins at their ends are provided in a concave reflecting mirror of the ultra-high-pressure mercury lamp (for example, see Japanese Unexamined Patent Application, Publication No. 2000-131764). In addition, in a projector including a light source apparatus formed of a lamp bulb for emitting light and a reflector for reflecting the light that the lamp bulb emits, a method has been proposed in which a heat-conducting member, namely, a metal with high thermal conductivity or a heat pipe, is attached to the lamp bulb or the reflector (for example, see Japanese Unexamined Patent Application, Publication No. 2002-352612). In addition, a method has been proposed in which a heat-conducting device is attached for actively transferring the heat via the heat conducting member in the method described above (for example, see Japanese Unexamined Patent Application, Publication No. 2002-373523).

Patent Document 1: Japanese Unexamined Patent Application, Publication No. 2000-131764
Patent Document 2: Japanese Unexamined Patent Application, Publication No. 2002-352612
Patent Document 3: Japanese Unexamined Patent Application, Publication No. 2002-373523

### Disclosure of Invention

In recent years, devices using LEDs have been developed as light sources for projectors and so forth. Projectors using LEDs as light sources require multiple LEDs to provide bright images, as well as the ability to achieve compactness and low power consumption. When the temperature of LEDs increases, the light level decreases, and therefore, when using them as light sources for projectors, it is not possible to provide images having the required brightness. Therefore, when using LEDs as light sources for projectors, the heat that the multiple LEDs generate must be efficiently radiated. However, the heat-radiating methods of the related art described above, even with a single lamp, transfer the heat with a heat pipe or a member formed of metal etc. having a high thermal conductivity and radiate the heat using heat-radiating fins, Peltier devices, and so forth. Therefore, when using multiple light sources such as LEDs, they suffer from the problem that the heat-radiating efficiency is poor, and stable heat-radiation cannot be performed.

An object of the present invention is to provide a light source apparatus and a projector which can radiate heat by efficiently stabilizing a plurality of light sources.

A first aspect of the present invention is a light source apparatus for illuminating an illumination area via an illumination optical part, including a plurality of light sources for emitting illumination light; one heat-absorbing member for absorbing heat which the plurality of light sources generates; and a heat-radiating part for radiating the heat; a heat-transporting part thermally connected to the heat-absorbing member and the heat-radiating part; wherein the heat-transporting part includes a tube member containing a refrigerant for transmitting the heat and is provided at a position shifted from an irradiation position of the illumination light.

According to the light source apparatus described above, it is possible to absorb, all together, the heat that the plurality of light sources generate in the heat-absorbing member. In addition, it is possible to transfer the heat absorbed in the heat-absorbing member to a position away from the light sources using the heat-transporting part and to radiate it with the heat-radiating part.

In the light source apparatus described above, the heat-transporting part may be a heat pipe.
By using the heat pipe in the heat-transporting part, it is possible to efficiently transfer the heat in a small space.

A second aspect of the present invention is a projector using a light source apparatus, including an illumination optical part which optically acts on the illumination light so that the illumination light emitted from the light sources of the light source apparatus illuminates the illumination area; an image modulation device which is disposed at the illumination area and which modulates the illumination light irradiating the illumination area according to an input image signal and outputs modulated light; and a projection optical part for projecting the modulate light output from the image modulation device onto the illumination area as an image.

According to the projector described above, because it is possible to efficiently perform heat radiation of the built-in light source apparatus, it is possible to emit more stable illumination light, which allows a stable image to be continuously provided.

In the projector described above, the heat-radiating part of the light source apparatus is preferably positioned further frontward than the heat-absorbing member of the light source apparatus and is provided such that, when mounted to a flat mounting surface such as a table or floor, the tube member of the heat-transporting part of the light source apparatus is parallel to the mounting surface, or, a distance between a heat-radiating end of the tube member and the mounting surface is larger than a distance between a heat-absorbing end of the tube member and the mounting surface.

The mounted-type projector, which is mounted to a flat mounting surface such as a table or floor, normally projects parallel to the mounting surface or higher than the mounting surface, in other words, it projects upward. With the configuration described above, the heat-radiating part of the light source apparatus is positioned further frontward than the heat-absorbing member of the light source apparatus, and when the projector body is mounted to a flat mounting surface such as a table or floor, it is disposed so that the tube member of the heat-transporting part of the light source apparatus is parallel to the mounting surface, or so that the distance between the mounting surface and the heat-radiating end of the tube member is larger than the distance between the mounting surface and the heat-absorbing end of the tube member. Therefore, the tube member of the heat-transporting part, which is thermally connected to the heat-radiating part and the heat-absorbing member, is disposed so that it is always parallel to the mounting surface, or so that the heat-radiating end is higher. Accordingly, it is possible to prevent a reduction in the amount of heat transported. In particular, when using a heat-transporting part in which the amount of heat transported varies with the angle of the heat pipe etc., it is possible to efficiently transfer and radiate the heat.

In the projector described above, the heat-radiating part of the light source apparatus is preferably positioned further rearward than the heat-absorbing member of the light source apparatus, and is disposed such that, when suspended from a flat suspension surface such as a ceiling, the tube member of the heat-transporting part of the light source apparatus is parallel to the suspension surface, or, a distance between a heat-radiating end of the tube member and the suspension surface is smaller than a distance between a heat-absorbing end of the tube member and the suspension surface.

The suspended-type projector, which is suspended from a flat suspension surface such as a ceiling, normally projects lower than the suspension surface, that is, projects downward. According to the configuration described above, the heat-radiating part of the light source apparatus is positioned further rearward than the heat-absorbing member of the light source apparatus, and when the projector body is suspended from a flat suspension surface such as a ceiling, it is disposed so that the tube member of the heat-transporting part of the light source apparatus is parallel to the suspension surface, or so that the distance between the suspension surface and the heat-radiating end of the tube member is smaller than the distance between the suspension surface and the heat-absorbing end of the tube member. Therefore, the tube member of the heat-transporting part, which is thermally connected to the heat-radiating part and the heat-absorbing member, is disposed so that it is always parallel to the suspension surface or so that the heat-radiating end is higher. Accordingly, it is possible to prevent a reduction in the amount of heat transported. In particular, when using a heat-transporting part in which the amount of heat transported varies with the angle of the heat pipe etc., it is possible to efficiently transfer and radiate the heat.

In the projector described above, an optical axis, which is a center line of the projection optical part, and the tube member of the heat-transporting part of the light source apparatus are preferably substantially orthogonal in plan view.

Because the tube member of the heat-transporting part is placed substantially orthogonal to the optical axis, in plan view, even if the angle formed by the optical axis and the horizontal changes due to the placement conditions, projection conditions, and so forth, the tilt angle of the tube member does not change. Accordingly, it is possible to keep the amount of heat transported substantially constant, whether projecting upward in a mounted configuration or projecting downward in a suspended configuration.

In the projector described above, the heat-radiating part of the light source apparatus may be positioned above an optical axis, which is a center line of the projection optical part.
The heat radiated from the heat-radiating part goes above the heat-radiating part. With the configuration described above, because the heat-radiating part is located above the optical axis, it is possible to prevent fluctuation of the projected image due to the radiated heat.

The projector described above may further include a tube-member tilt-angle detecting part for detecting a tube-member tilt angle, which is a tilt angle of the tube member of the heat-transporting part of the light source apparatus; and a light-level controlling part for controlling the light level that the light sources of the light source apparatus emit, on the basis of the tube-member tilt angle measured by the tube-member tilt-angle detecting part.

When the inclination of the projector body is changed, the tube-member tilt angle, which represents the tilt angle of the tube member provided inside the projector, also changes. Then, by changing the tube-member tilt angle, the amount of transported heat which is transported to the heat-radiating part from the heat-absorbing member varies. With the configuration described above, the tube-member tilt-angle detecting part measures the tube-member tilt angle, and the light-level controlling part controls the light level emitted from the light sources on the basis of the measured tube-member tilt angle. Therefore, it is possible to adjust the amount of generated heat in the light sources according to the variation in the amount of heat transported. Accordingly, it is possible to prevent a rise in temperature of the light sources.

The projector described above may further include a computing part including a computational expression relating a change in the tube-member tilt angle and the light level, for calculating the light level corresponding to an amount of generated heat which can be radiated, with the tube-member tilt angle measured by the tube-member tilt-angle detecting part serving as a parameter, wherein the light-level controlling part controls the light level which the light sources emit on the basis of the light level calculated by the computing part.

With the configuration described above, a light level that does not result in heat buildup in the light sources is determined by the computing part from the tube-member tilt angle detected by the tube-member tilt-angle detecting part by using the computational expression relating the change in tube-member tilt angle and the light level, which represents a balance condition between the amount of heat which the light sources generate and the amount of heat transported by the heat-transporting part. Then, on the basis of this light level, the light level of the light sources is controlled by the light-level controlling part. Accordingly, it is possible to always keep the emitted light from the light sources in a safe region where the light sources are not damaged.

The projector described above may further include a time measuring part for measuring elapsed time from when the tube-member tilt angle measured by the tube-member tilt-angle detecting part changes, wherein the light-level controlling part controls the light level which the light sources emit according to the elapsed time measured by the time measuring part.

With the configuration described above, the elapsed time from when the tube-member tilt angle changes is measured by the time measuring part, and the light level which the light sources emit is controlled according to this elapsed time. Accordingly, when, for example, a change in the tube-member tilt angle occurs, it is possible to change the light level when this elapsed time reaches a certain fixed time. As a result, even if the tube-member tilt angle changes frequently, it is possible to prevent a change in the light level each time, and it is thus possible to project a stable image.

The projector described above may further include an allowable-heat-buildup setting part for setting an allowable heat buildup of the light sources; wherein the computing part calculates a heat-buildup factor, which is a difference between an amount of generated heat and an amount of radiated heat per unit time, with the tube-member tilt angle and the light level serving as parameters, calculates a total heat buildup by calculating a sum of products of the heat buildup factor and the elapsed time output from the time measuring part, and compares the total heat buildup and the allowable heat buildup output from the allowable-heat-buildup setting part; and wherein the light-level controlling part controls the light level which the light sources emit according to a size comparison result of the total heat buildup and the allowable heat buildup.

With the configuration described above, the amount of radiated heat is calculated with the tube-member tilt angle as a parameter, and the amount of generated heat is calculated with the light level as a parameter, and the total heat buildup accumulated in the light sources is calculated from the heat-buildup factor, which is the difference thereof, and the measured elapsed time. Then, the light level from the light sources is controlled according to the relationship between this total heat buildup and the allowable heat buildup which is allowed in terms of thermal durability. Therefore, it is possible to project a stable image with a constant light level until the total heat buildup reaches the allowable level of buildup, regardless of changes in the tube-member tilt angle. Also, for example, at the point when the total heat buildup reaches the allowable heat buildup, it is possible to automatically reduce the light level of the light sources to a safe region where the light sources are not damaged by the heat, according to the tube-member tilt angle at that time.

The projector described above may further include a cooling part which is capable of changing a cooling level.
With the configuration described above, because the cooling part, which is capable of changing the cooling level, is also provided, it is possible to reduce the heat buildup in the light sources by facilitating the heat radiation by the heat-radiating part. Accordingly, it is possible to realize a projector with longer lifetime and higher brightness.

In the projector described above, the cooling part is, for example, a cooling fan.
By employing a cooling fan as the cooling part, it is possible to freely change the cooling level by changing the rotation speed of the fan, which makes it possible to facilitate the heat radiation of the heat-radiating part. In addition, it is also possible to facilitate the heat radiation by making it act directly on the light sources or the heat-absorbing member.

The projector described above may further include a tube-member tilt-angle detecting part for detecting a tube-member tilt angle, which is a tilt angle of the tube member of the heat-transporting part of the light source apparatus; and a cooling-level controlling part for determining the cooling level of the cooling part on the basis of the tube-member tilt angle measured by the tube-member tilt-angle detecting part.
With the configuration described above, because the cooling level of the cooling part is adjusted on the basis of the measured tube-member tilt angle, it is possible to control the amount of heat radiated by the heat-radiating part.

According to the present invention, heat generated by the plurality of light sources can be absorbed by the heat-absorbing member, and this heat can be transported to the heat-radiating part by the heat-transporting part and radiated by the heat-radiating part. Therefore, it is not necessary to provide various devices related to radiating heat for the plurality of light sources, and it is thus possible to provide a light source apparatus which can efficiently radiate the heat of the plurality of light sources in a small space. In addition, by monitoring and controlling the amount of generated heat from the light sources and the amount of radiated heat, which changes according to the angle of the inclination of the projector body, it is possible to safely and continuously project a stable image.

### Brief Description of Drawings

[Fig. 1] Fig. 1 is a sectional view showing a light source apparatus of a first embodiment of the present invention.
[Fig. 2] Fig. 2 is a sectional view showing a first modification of the light source apparatus of the first embodiment of the present invention.
[Fig. 3] Fig. 3 is a perspective view showing light sources of a first modification of the first embodiment of the present invention.
[Fig. 4] Fig. 4 is a sectional view showing a light source apparatus of a second modification of the first embodiment of the present invention.
[Fig. 5] Fig. 5 is a sectional view schematically showing constituent elements of a projector of a second embodiment of the present invention.
[Fig. 6] Fig. 6 is a sectional view schematically showing constituent elements of the projector of the second embodiment of the present invention.
[Fig. 7] Fig. 7 is a sectional view showing a usage mode of the projector of the second embodiment of the present invention.
[Fig. 8] Fig. 8 is a sectional view showing a usage mode of the projector of the second embodiment of the present invention.
[Fig. 9] Fig. 9 is a sectional view showing a projector of a first modification of the second embodiment of the present invention in use.
[Fig. 10] Fig. 10 is a sectional view showing a projector of a second modification of the second embodiment of the present invention in use.
[Fig. 11] Fig. 11 is a sectional view schematically showing constituent elements of a projector of a third embodiment of the present invention.
[Fig. 12] Fig. 12 is a graph showing a computational expression in a computing part of the third embodiment of the present invention.
[Fig. 13] Fig. 13 is a graph showing a computational expression in the computing part of the third embodiment of the present invention.
[Fig. 14] Fig. 14 is a graph showing a computational expression in the computing part of the third embodiment of the present invention.
[Fig. 15] Fig. 15 is a block diagram showing a control flow of the third embodiment of the present invention.
[Fig. 16] Fig. 16 is a block diagram showing a control flow of the third embodiment of the present invention.
[Fig. 17] Fig. 17 is a block diagram showing a control flow of the third embodiment of the present invention.
[Fig. 18] Fig. 18 is a sectional view schematically showing constituent elements of a projector of modification of the third embodiment of the present invention.

### Best Mode for Carrying Out the Invention

### First Embodiment

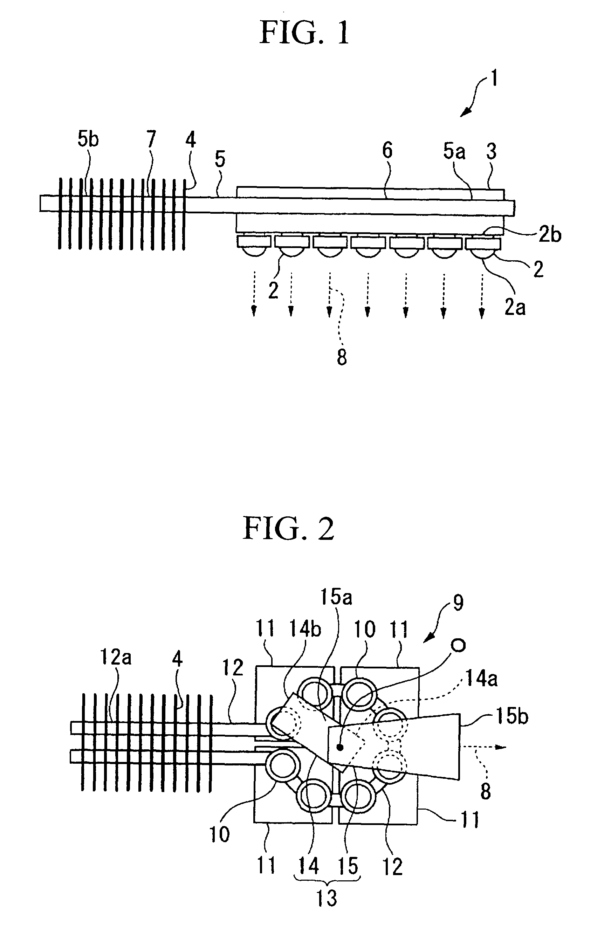

Fig. 1 is a sectional view of a light source apparatus 1 according to a first embodiment of the present invention. As shown in Fig. 1, the light source apparatus 1 of this embodiment includes a plurality of light sources 2; a single heat-absorbing block 3 which is provided at opposite sides 2b of light-emitting parts 2a of the light sources 2 and which is thermally connected to all of the plurality of light sources 2 to serve as a heat-absorbing member; a heat-radiating part 4 for radiating the heat absorbed by the heat-absorbing block 3; and a heat-transporting part 5 which is thermally connected to the heat-absorbing block 3 at one end 5a and which is thermally connected to the heat-radiating part 4 at another end 5b. The light sources 2 are LEDs. The heat-absorbing block 3 absorbs heat generated by the LEDs, that is, the light sources 2, which emit light, and is formed in the shape of a block made of metal with high thermal conductivity, such as copper. The heat-radiating part 4 is, for example, heat-radiating fin which efficiently radiate conducted heat into the atmosphere, and is formed of a metal with a high thermal conductivity, such as copper. The heat-transporting part 5 allows the heat absorbed in the heat-absorbing block 3 to be conducted to the heat-radiating part 4; more specifically, it is a heat pipe containing a refrigerant inside a tube member that is formed of metal with a high thermal conductivity, such as copper. A thermal joint 6 of the heat-transporting part 5 and the heat-absorbing block 3 and a thermal joint 7 of the heat-transporting part 5 and the heat-radiating part 4 are set to have a contact length that is as long as possible in order to increase the thermal conductivity. This light source apparatus 1 is connected to a power supply (not shown in the drawings) for illuminating the LEDs serving as the light sources 2.

In the light source apparatus 1 described above, the heat that each of the plurality of light sources 2 generates when emitting illumination light 8 is collectively absorbed by the heat-absorbing block 3, and this heat is conducted from the light sources 2 to a position separated therefrom by the heat-transporting part 5 and is radiated by the heat-radiating part 4. Accordingly, the heat from the light sources 2 is efficiently radiated. In particular, when using LEDs as the light sources, because a plurality of light sources is necessary to achieve high brightness, the amount of generated heat is greater than usual. Because a high heat-radiation effect can be obtained with the light source apparatus 1 according to this embodiment, it can be adequately used in with cases where, for example, LEDs are employed as the light sources, as described above.
Since the light sources 2 and the heat-radiating part 4 are disposed at separated positions, it is possible to prevent the illumination light 8 emitted from the light sources 2 from becoming unstable due to the effect of the heat radiated by the heat-radiating part 4. When this light source apparatus 1 is used as a light source in combination with another apparatus, even though the light sources 2 and the heat-radiating part 4 are separated, they may be thermally connected by the heat-transporting part 5; therefore, it is possible to set their positions freely in accordance with the heat-radiation conditions, the assembly conditions in relation to other components, and so forth.

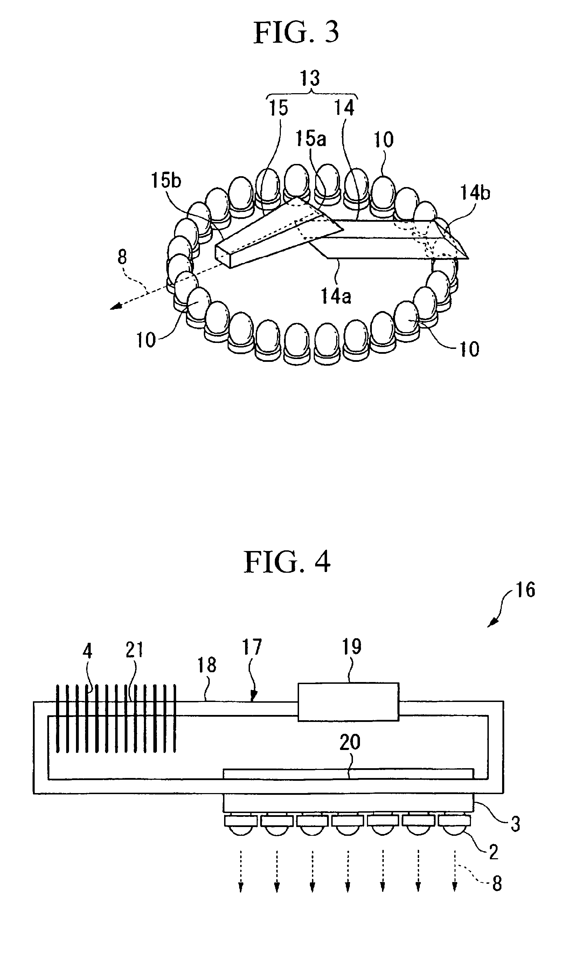

Figs. 2 and 3 show a first modification of the light source apparatus 1 according to the first embodiment of the present invention. Fig. 2 is a plan view of a light source apparatus 9 of this modification, and Fig. 3 is a perspective view showing details of light sources 10 of this light source apparatus 9. As shown in Fig. 2, the light source apparatus 9 of this modification includes a plurality of the light sources 10, which are LEDs arranged in the shape of a circle; four heat-absorbing blocks 11 which are thermally connected to the plurality of light sources 10; a heat-radiating part 4 formed of heat-radiating fins; and a heat-transporting part 12 which is thermally connected to the four heat-absorbing blocks 11 and the heat-radiating part 4. The heat-transporting part 12 places the four heat-absorbing blocks 11 in thermal contact with each other and is a U-shaped heat pipe that is thermally connected to the heat-radiating part 4 at end portions 12a.
In the light source apparatus 9 of this modification, the heat generated by the light sources 10 is not absorbed by a single member, but is absorbed by the plurality of heat-absorbing blocks 11 which are in thermal contact with each other via the heat-transporting part 12. In this modification, the number of heat-absorbing blocks 11 is four, but it is not limited thereto. For example, it is possible to absorb the heat from the plurality of light sources 10 with a plurality of heat-absorbing blocks 11, and each heat-absorbing block 11 should be thermally connected with the heat-transporting part 12. Also, as shown in Fig. 2, although the heat-transporting part 12 is disposed so as to connect the heat-absorbing blocks 11 in the light source apparatus 9 of this modification, its position is preferably directly below the positions where the light sources 10 are arranged. With this placement, it is possible to efficiently conduct the heat generated by the light sources 10 from the heat-absorbing blocks 11 to the heat-transporting part 12.

As shown in Figs. 2 and 3, the light source apparatus 9 is provided with a light-guiding rod 13 serving as an illumination optical part. The light-guiding rod 13 is made of a transparent material having a refractive index greater than 1 and is formed of two bar-shaped rods, that is, a rotating rod 14 and an illumination rod 15, which are optically connected. The rotating rod 14 is disposed so as to be rotatably axially connected, at one end 14a, to a center point O around which the light sources 10 are arranged in the form of a circle, and so that another end 14b can move in the circumferential direction above the light sources 10 when the rotating rod 14 is rotated about the center O. The illumination rod 15 is optically connected to the rotating rod 14 at one end 15a, and another end 15b is disposed so as to orient the illumination direction.

The illumination light 8 in this light-guiding rod 13, which is emitted from the light source 10 located below the other end 14b of the rotating rod 14, is transmitted inside the rotating rod 14. The transmitted illumination light 8 enters the illumination rod 15, which is optically connected to the one end 14a of the rotating rod 14. The illumination light 8 that enters the illumination rod 15 is transmitted through the illumination rod 15, exits from the other end 15b, and irradiates a target object to be irradiated. Here, the rotating rod 14 is rotated at high speed so as to sequentially emit the illumination light 8 from only the light source 10 corresponding to the other end 14b of the rotating rod 14. That is, by synchronizing the rotation of the rotating rod 14 and the flashing of the light source 10 with a control device, which is not shown in the drawings, only the corresponding light sources 10 are made to sequentially emit light in association with the rotation of the rotating rod 14. Accordingly, each light source 10 should be illuminated only when the rotating rod 14 is located thereabove, and therefore, continuous illumination is not necessary. In contrast, because the illumination light 8 is always supplied to the rotating rod 14 from one of the light sources 10, the illumination light 8 is constantly radiated from the other end 15b of the illumination rod 15. Thus, by using this light-guiding rod 13 together with the light source apparatus 9 as the illumination optical part, it is not necessary to constantly illuminate the light sources 10, and it is possible to supply high-brightness illumination under stable thermal conditions.

Fig. 4 shows a second modification of the light source apparatus according to the first embodiment. A light source apparatus 16 of this modification includes a light source 2, a heat-absorbing block 3, a heat-radiating part 4, and a heat-transporting part 17. The heat-transporting part 17 includes a tube member 18 formed in a perimeter-like shape and made of a metal with a high thermal conductivity, such as copper; and a liquid-transporting part 19 for pumping and circulating a refrigerant filling the interior of the tube member 18 to serve as a refrigerant. The tube member 18 described above is thermally connected with the heat-absorbing block 3 via a thermal joint 20 and is thermally connected with the heat-radiating part 4 via a thermal joint 21.

In the light source apparatus 16 of this modification, the heat generated from the light source 2 is absorbed by the heat-absorbing block 3. This heat is then transmitted to the heat-transporting part 17 at the thermal joint 20. The transmitted heat is transferred to the refrigerant circulating inside the tube member 18 of the heat-transporting part 17 and is transferred together with the refrigerant to the position of the thermal joint 21 which is connected with the heat-radiating part 4. At the thermal joint 21, the heat is transmitted to the heat-radiating part 4, where it is radiated into the atmosphere. The refrigerant which is cooled by transferring the heat to the heat-radiating part 4 is pumped again by the liquid-transporting part 19 and is transferred to the position of the thermal joint 20 in contact with the heat-absorbing block 3. With this light source apparatus 16, it is possible to forcibly transfer the refrigerant, regardless of the relative positional relationship of the heat-absorbing block 3 and the heat-radiating part 4. As a result, a superior cooling effect can be obtained, regardless of the orientation of the light source apparatus 16.

### Second embodiment

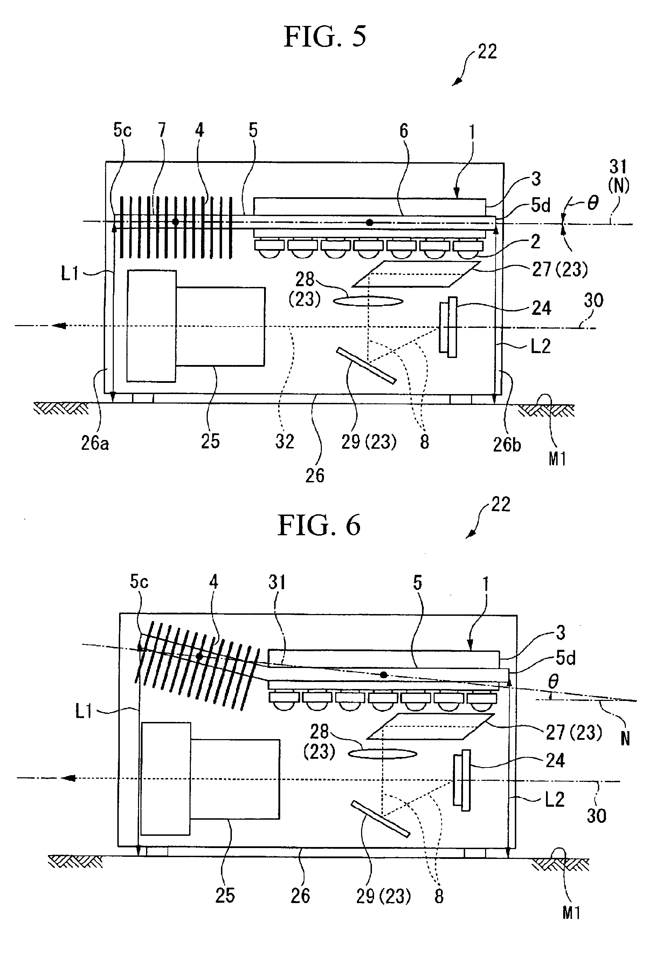

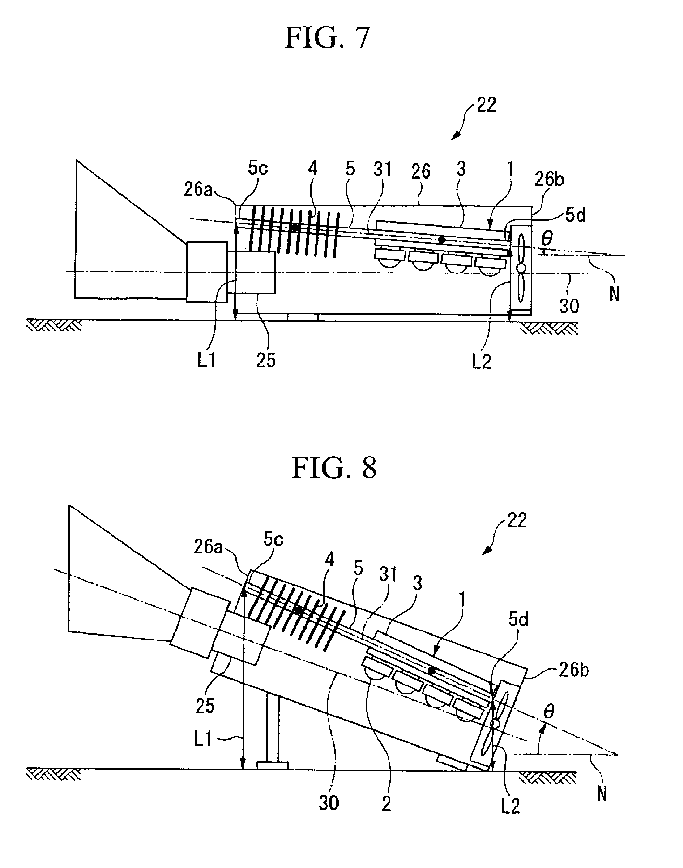

Figs. 5 to 8 show a second embodiment of the present invention. In this embodiment, parts that are equivalent to the parts used in the embodiment described above are assigned the same reference numerals, and a description thereof is omitted. Figs. 5 and 6 are cross-sectional views schematically showing the constituent elements of a projector 22 of this embodiment. Fig. 7 is a sectional view of the projector 22 shown in Figs. 5 and 6 when used horizontally, and Fig. 8 is a sectional view of the projector shown in Fig. 5 and 6 when projecting upward.

The projector 22 according to this embodiment, which is a mounted-type projector used while mounted to a flat mounting surface M1, such as a table or floor, includes a light source apparatus 1; an illumination optical unit 23 which optically operates so that illumination light 8 emitted by the light source apparatus 1 illuminates an illumination area; an image modulation device 24, provided at the illumination area, for modulating the illumination light 8; a projection optical unit 25 for projecting modulated light 32 output from the image modulation device 24 as an image; and a chassis 26 forming the exterior. The illumination optical unit 23 includes a light-guiding rod 27, a lens 28, and a mirror 29. More specifically, the image modulation device 24 is a DMD (trademark of Texas Instruments Inc., US). The projection optical unit 25 is disposed at a front 26a of the chassis 26 so as to protrude to the exterior. An optical axis 30 representing the center line of the projection optical unit 25 is set to be substantially horizontal when the chassis 26 is mounted to the horizontal mounting surface M1. The heat-radiating part 4 of the light source apparatus 1 is located at the front 26a inside the chassis 26 and above the projection optical unit 25. The heat-absorbing block 3 of the light source apparatus 1 is located at a rear 26b of the chassis 26. A tube member used as the heat-transporting part 5 thermally connecting the heat-absorbing block 3 and the heat-radiating part 4 is disposed so that a center line 31 thereof is substantially parallel to the optical axis 30. The tube member is, for example, a heat pipe. The projector 22 also includes a power supply apparatus (not shown in the drawings) for operating the light source apparatus 1 and the image modulation device 24, as well as other driving and control systems.

When the light source apparatus 1 is operated, the light sources 2 emit light. The illumination light 8 from the plurality of light sources 2 is transmitted through the light-guiding rod 27 of the illumination optical unit 23, and after being converged by the lens 28, it is reflected at the mirror 29 and illuminates the entire image modulation device 24, which is the illumination area. The illumination light 8 illuminating the image modulation device 24 is modulated in pixel units and is output as the modulated light 32. This modulated light 32 is magnified by the projection optical unit 25 and is projected as an image onto a projection area. While image projection is being performed by the projector 22, the plurality of light sources 2 of the light source apparatus 1 in the projector 22 constantly generate heat. The generated heat is absorbed by the heat-absorbing block 3 and is transferred to the heat-radiating part 4 by the heat pipe, that is, the heat-transporting part 5, where it is radiated into the atmosphere.

The amount of heat transported changes with the tilt angle of the heat pipe. The tilt angle which the heat pipe forms with the horizontal is defined as a tube-member tilt angle θ, and the tube-member tilt angle is defined as positive when the heat-radiating side is high relative to the heat-absorbing side. When this tube-member tilt angle θ increases and takes a positive value, the heat-radiating side becomes high relative to the heat-absorbing side, and therefore, the amount of heat transported is not reduced. As a result, it is possible to efficiently transfer the heat. When the tube-member tilt angle θ decreases and takes a negative value, the heat-radiating side becomes low relative to the heat-absorbing side, and therefore, the amount of heat transported is reduced.

In Fig. 5, the projector 22 is disposed substantially parallel to the flat mounting surface M1. The tube-member tilt angle θ is the angle formed by the center line 31 of the heat pipe, that is, the heat-transporting part 5, and the horizontal N. The mounting surface M1 in Fig. 5 is flat, and the center line 31 of the heat pipe, that is, the heat-transporting part 5, is substantially parallel to the mounting surface M1. Thus, a distance L1 between the mounting surface M1 and a heat-dissipating end 5c of the heat pipe and a distance L2 between the mounting surface M1 and a heat-absorbing end 5d of the heat pipe are substantially equal, thus achieving a substantially horizontal state; in other words, the tube-member tilt angle θ becomes 0 degrees. With the projector shown in Fig. 5, the optical axis 30 and the center line 31 of the heat pipe are set to be substantially parallel; however, they need not be parallel. In Fig. 6, the center line 31 of the heat pipe diverges from the optical axis 30 towards the front 26a of the chassis 26 of the projector 22; in other words, they are not parallel. When the projector 22 is mounted to the flat mounting surface M1 in this state, the optical axis 30 is substantially horizontal. Regarding the heat pipe on the other hand, because the distance L1 between the mounting surface M1 and the heat-radiating end 5c is larger than the distance L2 between the mounting surface M1 and the heat-absorbing end 5d, the heat-radiating part 4 is at a relatively high position compared to the heat-absorbing block 3. As a result, the tube-member tilt angle θ takes a positive value, and the amount of heat transported by the heat pipe becomes larger than in the state shown in Fig. 5.

Figs. 7 and 8 show usage modes of the projector 22 described above. Fig. 7 shows it mounted horizontally, and Fig. 8 shows it mounted at an incline. Thus, the mounted-type projector 22 can be used in a normal usage method such that the optical axis 30 is horizontal, as shown in Fig. 7, or in a usage mode for projecting upward so that the optical axis 30 is directed upward, as shown in Fig. 8. With the projector 22 of this embodiment, the heat-radiating part 4 is disposed at the front 26a of the chassis 26, and the heat-absorbing block 3 is disposed at the rear 26b of the chassis 26. The center line 31 of the heat pipe, that is, the heat-transporting part 5, is substantially parallel to the optical axis 30 or is non-parallel so as to diverge towards the front 26a. Therefore, the tube-member tilt angle θ always takes a positive value. Thus, the distance L1 between the mounting surface M1 and the heat-radiating end 5c is larger than the distance L2 between the mounting surface M1 and the heat-absorbing end 5d, and the heat-radiating side is thus relatively higher than the heat-absorbing side. Therefore, it is possible to keep the amount of heat transported by the heat pipe, that is, the heat-transporting part 5, high, within the range of its performance. Here, although the heat-radiating part 4 is close to the projecting optical part 25, because it is located at a higher position, the heat is radiated upward. Accordingly, it is possible to prevent fluctuation of the image caused by the projection optical part 25 being affected by the heat.

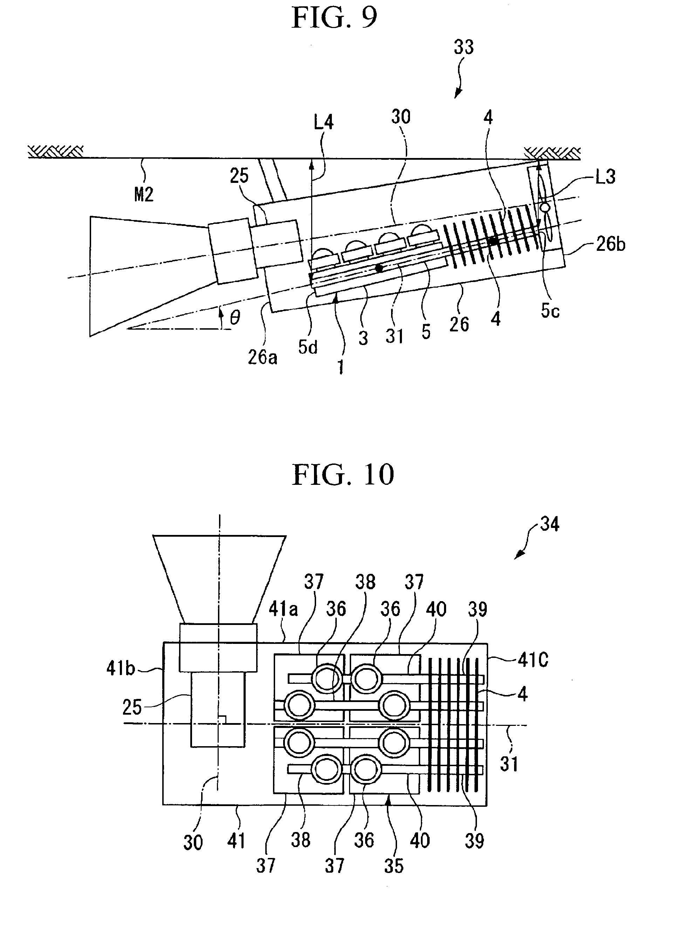

Fig. 9 shows a first modification of the projector according to the second embodiment. A projector 33 of this modification is a suspended type that is suspended from a flat suspension surface M2, such as a ceiling, and is used in a downward projecting manner where it projects downward from above. In the projector 33, the heat-radiating part 4 is disposed at the rear 26b of the chassis 26, and the heat-absorbing block 3 is disposed at the front 26a of the chassis 26. The tube-member tilt angle θ in this modification is defined as being positive when the heat-radiating part 4 is at a higher position relative to the heat-absorbing block 3. In this modification, the center line 31 of the heat pipe 5, that is, the heat-transporting part, is substantially parallel to the optical axis 30 or is non-parallel thereto such that it diverges towards the front 26a. Thus, the tube-member tilt angle θ always takes a positive value, and a distance L3 between the suspension surface M2 and the heat-radiating end 5c is smaller than a distance L4 between the mounting surface M2 and the heat-absorbing end 5d. As a result, the heat-radiating side is high relative to the heat-absorbing side. Therefore, it is possible to keep the amount of heat transported by the heat pipe 5 high, within the range of its performance. Because the heat-radiating part 4 is provided at a position away from the optical part 25, it is possible to prevent fluctuation of the image caused by the influence of heat due to heat radiation.

Fig. 10 shows a second modification of this embodiment. A light source apparatus 35 of a projector 34 of this modification includes a plurality of light sources 36, which are LEDs, arranged in the shape of a circle; four heat-absorbing blocks 37 thermally connected to the plurality of light sources 36; a heat-radiating part 4; a heat-transporting part 40, connected to the heat-absorbing blocks 37 and the heat-radiating part 4, for transferring heat from the heat-absorbing blocks 37 to the heat-radiating part 4; and a chassis 41 forming the exterior. The heat-transporting part 40 is thermally connected to the heat-absorbing blocks 37 at thermal joints 38 and is connected to the heat-radiating part 4 at thermal joints 39. In this modification, the heat-transporting part 40 is formed of four heat pipes disposed side-by-side. The projection optical part 25 is provided at a position close to one edge 41b at a front 41a of the chassis 41. The heat-radiating part 4 of the light source apparatus 35 is provided, inside the chassis 41, at a position close to another edge 41c opposing the one edge 41b where the projection optical part 25 is provided. The projection optical unit 25 and the heat-transporting part 40 are disposed so that their center lines, that is, the optical axis 40 of the projection optical part 25 and the center line 31 of the heat pipes, are substantially orthogonal to each other in plan view.

With the projector 34 of this modification, whether it projects upward or projects downward, the tube-member tilt angle θ, which is the tilt angle of the center line 31 of the plurality of heat pipes disposed side-by-side as the heat-transporting part 40, is substantially unchanged at about 0 degrees. In other words, even if the inclination of the optical axis 30 changes depending on the projection conditions, it is possible to maintain substantially equal constant tube-member tilt angles θ when mounted horizontally, and it is possible to prevent a drop in the amount of heat transported by the heat pipes, that is, the heat-transporting part 40. Accordingly, it is possible to prevent heat buildup in the light sources 36.

### Third embodiment

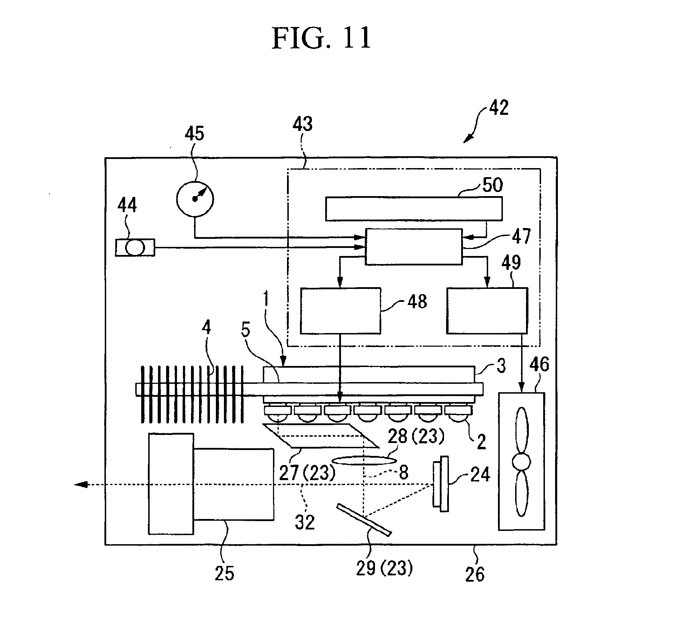

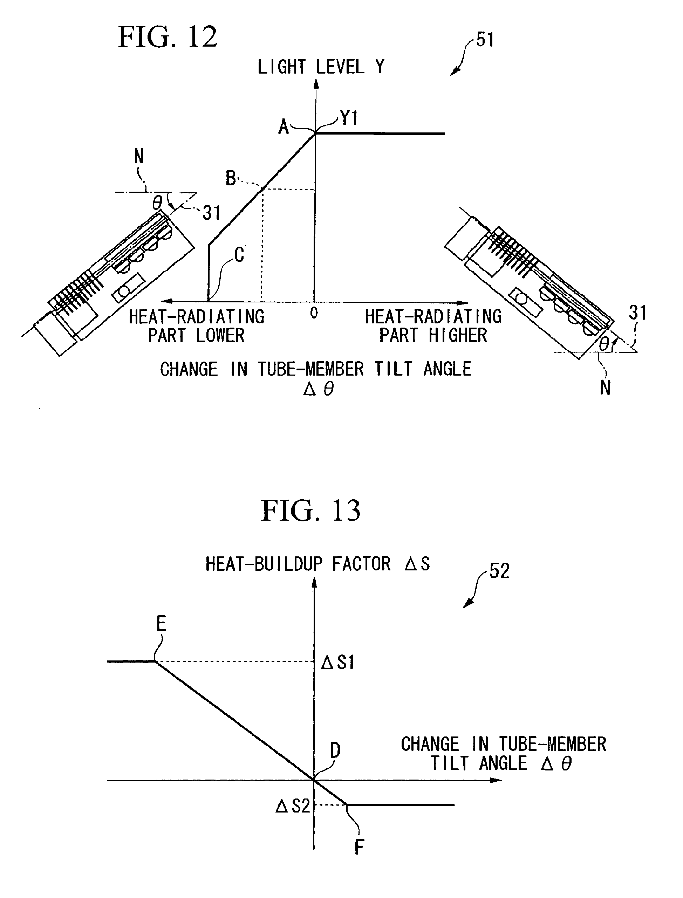

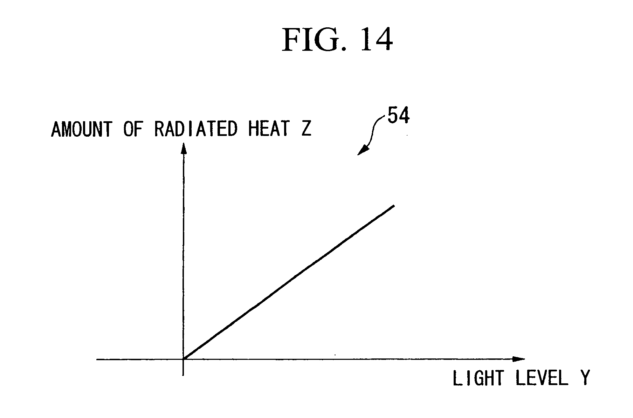

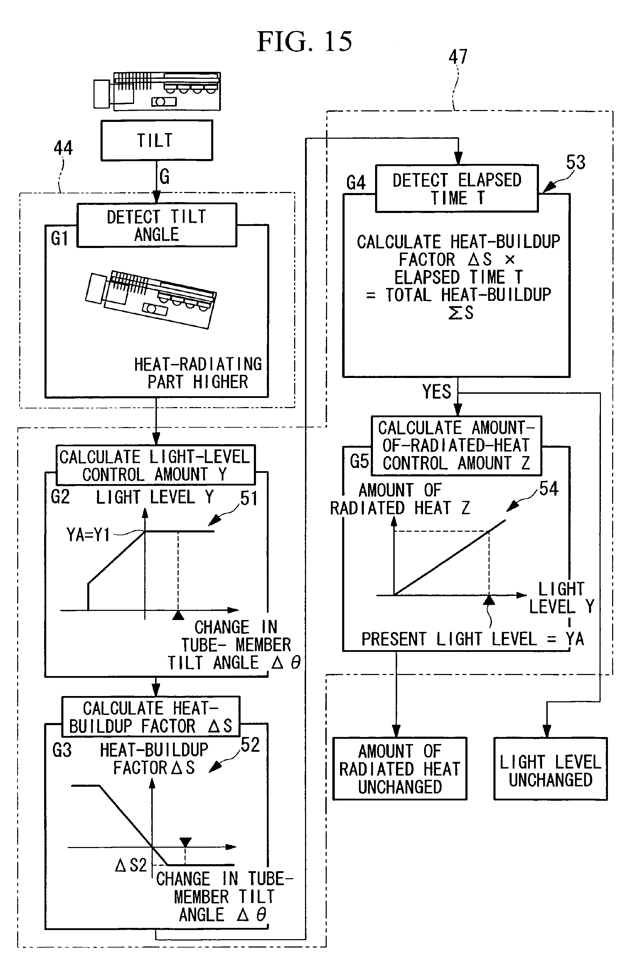

Figs. 11 to 17 show a third embodiment according to this invention. In this embodiment, members similar to the members used in the embodiments described above are assigned the same reference numerals, and a description thereof is omitted. Fig. 11 shows a schematic sectional view of a projector of this embodiment. Fig. 12 shows a graph of a computational expression 51 relating a change in tube-member tilt angle Δθ and a light level Y, which is built into a calculation unit 47 in a control unit 43 of a projector 42. Fig. 13 shows a graph of a computational expression 52 relating the change in tube-member tilt angle Δθ and a heat-buildup factor ΔS, which is built into the calculation unit 47 in the control unit 43 of the projector 42. Fig. 14 shows a graph of a computational expression 54 relating the light level Y and an amount of radiated heat Z, which is built into the calculation unit 47 in the control unit 43 of the projector 42. Figs. 15 to 17 are block diagrams showing a control flow of the control unit 43 of the projector 42.

As shown in Fig. 11, the projector 42 of this embodiment includes the control unit 43 for controlling each built-in device; a tube-member tilt-angle detection unit 44 for measuring the tube-member tilt angle θ; a time measuring unit 45 for measuring elapsed time T; and a cooling unit 46 for forcedly cooling the heat-generating part. The control unit 43 is formed of the calculation unit 47, which can perform calculations on the basis of various types of input measurement data and built-in computational expressions; a light-level control unit 48 which can adjust the light level Y of the light source 2; a cooling-level control unit 49 which can control the cooling level of the cooling unit 46; and an allowable-heat-buildup setting unit 50. The calculation unit 47 calculates control data from the input data using the computational expressions which are built therein in advance and outputs this control data to the light-level control unit 48 and the cooling-level control unit 49. The light-level control unit 48 adjusts the light level Y that the light sources 2 emit on the basis of the control data output from the calculation unit 47. The cooling-level control unit 49 adjusts the driving level of the cooling unit 46 on the basis of the control data output from the calculation unit 47 to change the cooling level. The allowable-heat-buildup setting unit 50 sets an allowable heat buildup SA according to the allowable heat buildup of the LEDs serving as the light source 2, in terms of their heat durability, and outputs this allowable heat buildup SA to the calculation unit 47. The allowable heat buildup SA may be a value that is registered in advance in the allowable-heat-buildup setting unit 50, or it may be a value that is set by the user via an input device, which is not shown in the drawings. The method of setting this allowable heat buildup SA is not particularly limited.
In addition, the tube-member tilt-angle detection unit 44 measures the tilt angle of the heat pipe serving as the heat-transporting part 5, in other words the tube-member tilt angle θ, and inputs it to the calculation unit 47. The tube-member tilt-angle detection unit 44 may be a tilt sensor that can detect the tilt directly, or it may be an acceleration sensor that can detect the tilt from the acceleration. The time measuring unit 45, for example, a timer, measures the elapsed time T and outputs the elapsed time T data to the calculation unit 47. The cooling unit 46 forcibly causes heat to be radiated by acting on heat-radiating fins used in the heat-radiating part 4 or the heat-absorbing block 3, and it is possible to change the cooling level by adjusting the driving level. The cooling unit 46 is, for example, a cooling fan. The term cooling level used here includes the amount of radiated heat Z at the heat-radiating part 4 and means the increased amount of radiated heat Z added by the cooling unit 46.

Next, the computational expressions built into the calculation unit 47 will be described. The computational expressions include the computational expression 51 relating the change in tube-member tilt angle Δθ and the light level Y shown as a graph in Fig. 12, the computational expression 52 relating the change in tube-member tilt angle Δθ and the heat-buildup factor ΔS shown as a graph in Fig. 13, the computational expression 53 relating the total heat buildup ΣS and the allowable heat buildup SA, and the computational expression 54 relating light level Y and the amount of radiated heat Z shown as a graph in Fig. 14.

The computational expression 51 relating the change in tube-member tilt angle Δθ and the light level Y, which is shown in Fig. 12 is for calculating a calculated light level YA, which is the light level which can be emitted, from the change in tube-member tilt-angle θ. The change in tube-member tilt angle Δθ indicates the difference between the tube-member tilt angle θ detected by the tube-member tilt-angle detection unit 44 and a reference tube-member tilt angle. The reference tube-member tilt angle is an angle that is set as follows. First, in this projector 42, the maximum amount of heat generation according to a maximum light level Y1 of the light sources 2, which is set to a range where the light sources 2 are not damaged, is calculated. This maximum amount of generated heat is determined based on the intrinsic characteristics of the LEDs serving as the light sources 2. The tube-member tilt angle θ of the heat-transporting part 5 when it is possible to transport an amount of heat equal to this maximum amount of generated heat is the reference tube-member tilt angle. In other words, as shown by point A in Fig. 12, when the change in tube-member tilt angle Δθ is zero, the calculated light level which can be emitted YA is the maximum light level Y1. Next, when the change in tube-member tilt angle Δθ takes a negative value (when the heat-radiating part is lower), if the light sources 2 emit at the maximum light level Y1, the amount of heat transported by the heat-transporting part 5 is smaller than the amount of generated heat. In other words, as shown at point B in Fig. 12, when the change in tube-member tilt angle θ takes a negative value, the calculated light level which can be emitted YA must be smaller than the maximum light level Y1. When the value of the change in tube-member tilt angle θ becomes even smaller, as shown at point C in Fig. 12, heat transport by the heat-transporting part 5 becomes difficult, and therefore the light level Y must be set to 0.

When the change in tube-member tilt angle Δθ takes a positive value, the amount of heat transported by the heat-transporting part 5 becomes larger than the amount of generated heat when the light sources 2 emit at the maximum light level Y1. In this case, however, because the maximum value of the light level Y emitted by the light sources 2 is defined as the maximum light level Y1, on the safe side, the calculated light level YA becomes the maximum light level Y1. By using the computational expression 51 relating the change in tube-member tilt angle Δθ and the light level Y, exhibiting the relationship described above, and the tube-member tilt-angle detection unit 44, when the projector 42 is tilted, it is possible to calculate the calculated light level YA of the light sources 2 that does not cause damage due to the heat that the light sources 2 generate.

The computational expression 52 relating the change in tube-member tilt angle Δθ and the heat buildup factor ΔS, which is shown in Fig. 13, is for calculating the heat-buildup factor ΔS indicating the heat buildup per unit time in the light sources 2, due to the light sources 2 emitting light at a constant prescribed level, from the change in tube-member tilt angle Δθ. As shown at point D in Fig. 13, when the change in tube-member tilt angle Δθ takes a value of 0, the amount of generated heat according to the light emitted from the light sources 2 and the amount of heat transported by the heat-transporting part 5 become equal, and therefore, the heat buildup in the light sources 2, in other words, the heat-buildup factor ΔS, takes a value of 0. When the change in tube-member tilt angle Δθ drops and takes a negative value, the amount of heat transported by the heat-transporting part 5 decreases, and therefore, the heat accumulating in the light sources 2, the heat buildup factor ΔS, is the difference between the amount of generated heat according to the emitted light from the light sources 2 and the amount of heat transported. The heat-buildup factor ΔS increases as the change in tube-member tilt angle Δθ decreases. At point E in Fig. 13, the heat-buildup factor ΔS takes a maximum value ΔS1, and the fact that the heat-buildup factor ΔS is fixed at the maximum value ΔS1 even though the tube-member tilt angle is inclined in the more negative direction indicates that the amount of heat transported by the heat-transporting part 5 is effectively zero.

On the other hand, when the change in tube-member tilt angle Δθ increases from point D and takes a positive value, because the heat transported by the heat-transporting part 5 increases, much more heat than the amount of generated heat can be radiated, namely, increased by an amount corresponding to the difference between the amount of generated heat according to the emitted light from the light sources 2 and the amount of heat transported. In other words, the heat-buildup factor ΔS takes a negative value. The heat-buildup factor ΔS decreases as the change in tube-member tilt angle Δθ increases, but at point F in Fig. 13, the heat-buildup factor ΔS takes a minimum value ΔS2, and the heat-buildup factor ΔS does not change even if the change in tube-member tilt angle Δθ becomes larger than that. This means that, even if the tube-member tilt angle θ increases, the amount of heat transported by the heat-transporting part 5 does not increase beyond this level. Thus, by using the computational expression 52 relating the change in tube-member tilt angle Δθ and the heat-buildup factor ΔS and the tube-member tilt-angle detection unit 44, when the projector 42 is tilted, it is possible to calculate the heat-buildup factor ΔS which is the amount of heat that is accumulated in the light sources 2 or the amount of heat that is radiated per unit time. With the computational expression 53 relating the total heat buildup ΣS and the allowable heat buildup SA, it is possible to obtain the total heat buildup ΣS of the light sources 2, which is the sum of products of the calculated heat-buildup factor ΔS and the elapsed time T measured by the time measuring unit 45, and it is possible to compare the calculated total heat buildup ΣS and the allowable heat buildup SA, representing the thermal durability of the light sources 2.

The computational expression 54 relating the light level Y and the amount of heat radiated Z, shown in Fig. 14, is for calculating the amount of radiated heat Z which must be radiated due to the light sources 2 generating heat by emitting light. The required amount of radiated heat Z also increases as the light level Y of the light sources 2 increases. Accordingly, it is possible to always monitor the amount of radiated heat Z for the current light level Y, for ensuring that heat is not accumulated in the light sources 2.

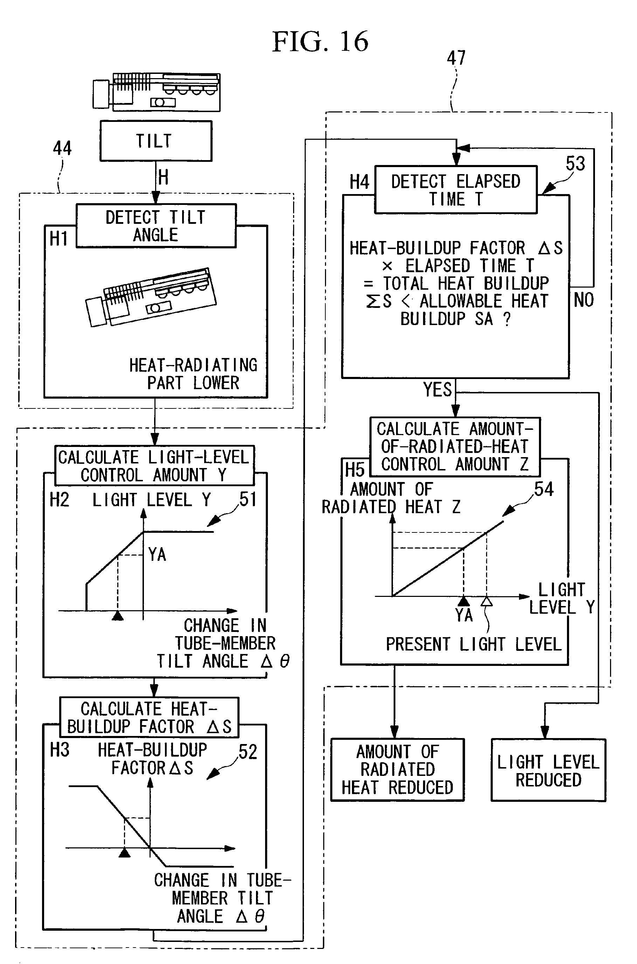

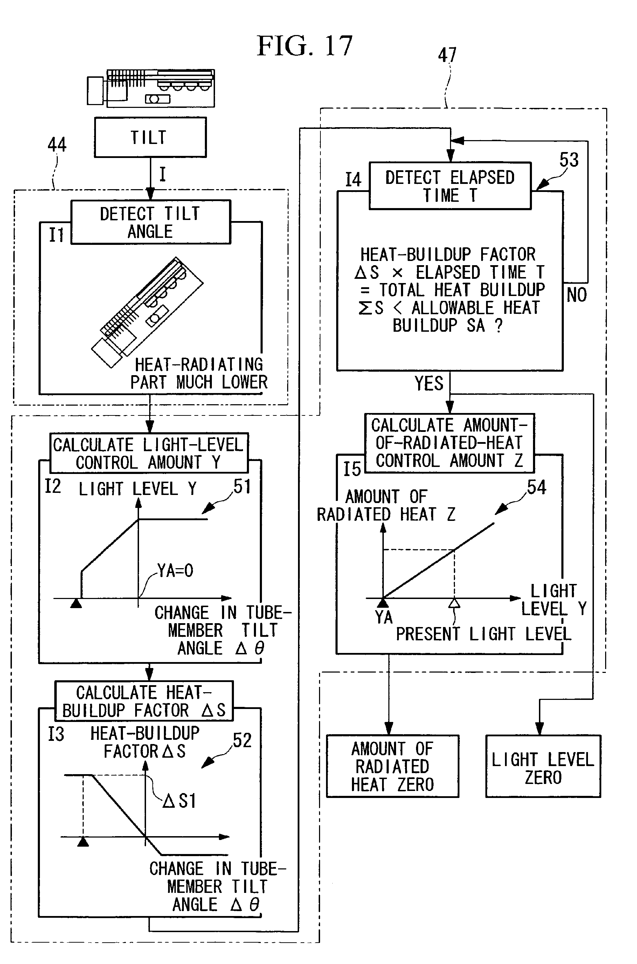

Next, the control flow using these expressions is shown in Figs. 15 to 17. The control flow shown in Figs. 15 to 17 is divided, based on the detection results of the tube-member tilt-angle detection unit 44, into condition G (see Fig. 15) where the change in tube-member tilt angle Δθ takes a positive value, a condition H (see Fig. 16) where the change in tube-member tilt angle Δθ takes a negative value, and a condition I (see Fig. 17) where the change in tube-member tilt angle Δθ decreases and heat transport in the heat-transporting part 5 becomes difficult. As shown in Figs. 15 to 17, first, the tube-member tilt angle θ is measured by the tube-member tilt-angle detection unit 44 (G1, H1, F1), and this measurement data is output to the calculation unit 47. In the calculation unit 47, the calculated light level YA and the heat-buildup factor ΔS corresponding to this measurement data are determined by referring to the built-in expression 51 relating the change in tube-member tilt angle Δθ and the light level Y (G2, H2, F2) and the computational expression 52 relating the change in tube-member tilt-angle Δθ and the heat-buildup factor ΔS (G3, H3, F3), respectively.

In the case of condition G, as shown in Fig. 15, the calculated light level YA is the maximum light level Y1 (G2), and the heat-buildup factor ΔS takes a negative value (G3). In other words, condition G means that the projector 42 can project an image with the maximum brightness, and the amount of radiated heat is always larger than the amount of generated heat, without heat buildup in the light sources 2 of the light source apparatus 1. Next, in G4 in Fig. 15, the elapsed time T measured by the time measuring unit 45 is output to the calculation unit 47. The calculation unit 47 determines the total heat buildup ΣS in the light sources 2 using the computational expression 53 relating the total heat buildup ΣS and the allowable heat buildup SA. Specifically, the calculation unit 47 determines the total heat buildup ΣS in the light sources 2 by calculating the sum of products of the elapsed time T and the heat-buildup factor ΔS calculated in G3 in Fig. 15. Then, the total heat buildup ΣS in the light sources 2 is output to the light-level control unit 48. Here, in the case of condition G, the total heat buildup ΣS in the light sources 2 has a decreasing tendency. Therefore, the heat generated by the light sources 2 as time passes does not build up, and the light sources 2 are not damaged. Accordingly, for example, the present light level is fixed at the calculated light level YA calculated in G2 in Fig. 15. Then, in G5 in Fig. 15, the calculation unit 47 calculates the required amount of radiated heat Z from the calculated light level YA using the computational expression 54 relating the light level Y and the amount of radiated heat Z and outputs this result to the cooling-level control unit 49. In this case, because the light level Y does not change, the required amount of radiated heat Z does not change either.

In the case of condition H, as shown in Fig. 16, the calculated light level YA is smaller than the present light level (H2), and the heat-buildup factor ΔS takes a positive value (H3). In other words, condition H means that, for the projector 42, if the light level Y of the light sources 2 does not drop to the calculated light level YA, the heat buildup in the light sources 2 per unit time is the heat-buildup factor ΔS. Next, in H4 in Fig. 16, the elapsed time T measured by the time measuring unit 53 is output to the calculation unit 47. The calculation unit 47 determines the total heat buildup. ΣS in the light sources 2 from the sum of products of the heat-buildup factor ΔS and the elapsed time T, calculated in H3 in Fig. 16, on the basis of the computational expression 53 relating the total heat buildup ΣS and the allowable heat buildup SA. Then, the calculation unit 47 compares the allowable heat buildup SA output from the allowable-heat-buildup setting unit 50 and the total heat buildup ΣS described above. If the total heat buildup ΣS is smaller than the allowable heat buildup SA, there is no risk yet of the light sources 2 being damaged by heat, thus operating on the safe side. Thus, the calculation unit 47 maintains the light level Y of the light sources 2 without reducing it to the calculated light level YA, and then the calculation in H4 in Fig. 16 is repeated again. On the other hand, if the total heat buildup ΣS is larger than the allowable heat buildup SA, the light sources 2 will be damaged by the heat, and therefore, the calculation unit 47 outputs the result of the calculated light level YA calculated in H2 in Fig. 16 to the light-level control unit 48. Accordingly, the light level Y which the light sources 2 emit is reduced. In H5 in Fig. 16, the calculation unit 47 calculates the required amount of radiated heat Z from the calculated light level YA using the computational expression 54 relating the light level Y and the amount of radiated heat Z, and outputs this result to the cooling-level control unit 49. On the basis of this amount of radiated heat Z, the amount of radiated heat Z is adjusted by adjusting the driving level of the cooling unit 46 by the cooling-level control unit 49.

In the case of condition I shown in Fig. 17, the calculated light level YA is zero (I2). In other words, condition I means that, for the projector 42, unless the light level Y of the light sources 2 becomes zero, the heat buildup in the light sources per unit time is the heat-buildup factor ΔS. This heat-buildup factor ΔS takes a maximum value ΔS1 (13). In this case too, like condition H, the total heat buildup ΣS is calculated in 14 in Fig. 17 on the basis of the computational expression 53 relating the total heat buildup ΣS and the allowable heat buildup SA, and it is compared with the allowable heat buildup SA. If the total heat buildup ΣS is smaller than the allowable heat buildup SA, there is no risk yet of the light sources 2 being damaged by heat, and they thus operate on the safe side; therefore, the calculation unit 47 maintains the light level Y of the light sources 2 without decreasing it to the calculated light level YA, and the calculation in I4 is repeated again. If the total heat buildup ΣS is larger than the allowable heat buildup SA, the light sources 2 will be damaged by heat; therefore the calculation unit 47 outputs the result of the calculated light level YA calculated in 12 in Fig. 17 to the light-level control unit 48, and the light level Y that the light sources 2 emit is set to 0. In 15 in Fig. 17, the calculation unit 47 calculates the required amount of radiated heat Z from the calculated light level YA and outputs this result to the cooling-level control unit 49. In this case, because the light level Y is zero, the required amount of radiated heat Z is also zero.
By repeatedly switching among the control flows shown in Figs. 15 to 17 according to the conditions while the tube-member tilt angle θ is varying, it is possible to monitor the total heat buildup ΣS in the light sources 2 and to control the light level Y and the amount of radiated heat Z.

As described above, because the projector 42 according to this embodiment includes the control unit 43, the tube-member tilt-angle detection unit 44, and the time measuring unit 45 and controls the light level Y and the amount of radiated heat Z on the basis of their detection values, it is possible to drive the light sources 2 at a safe light level Y where they are not damaged due to heat buildup, even when the tilt angle of the projector 42 changes. Furthermore, by performing the calculations in G4, H4, and 14 shown in Figs. 15 to 17 using the computational expression 53 relating the total heat buildup ΣS and the allowable heat buildup SA, the light level Y of the light sources 2 does not change instantaneously even if the tilt angle of the projector 42 is changed; it is possible to change the light level Y by providing a time difference in a permissible range. Therefore, this projector 42 is suitable not only in cases where it is used while mounted or suspended at a certain fixed angle, but also in cases where, for example, the operator holds it in his or her hand. When the operator holds the projector 42 in his or her hand, the inclination of the projector 42 varies frequently, and when the light level continually varies in accordance therewith, the projected image from the projector 42 is distorted. However, by using the control unit 43, the tube-member tilt-angle detection unit 44, and the time measuring unit 45 included in the projector 42, even if the inclination of the projector 42 varies, it is possible to project a stable image so long as the total heat buildup ΣS of the light sources 2 is at or below the allowable heat buildup SA. The total heat buildup ΣS is calculated from when the power supply of the projector 42 is turned on and the light sources 2 emit light until the power is turned off. Therefore, even if, for example, condition I continues and the total heat buildup ΣS exceeds the allowable heat buildup SA, it is possible to reduce the total heat buildup ZS by changing to condition G.

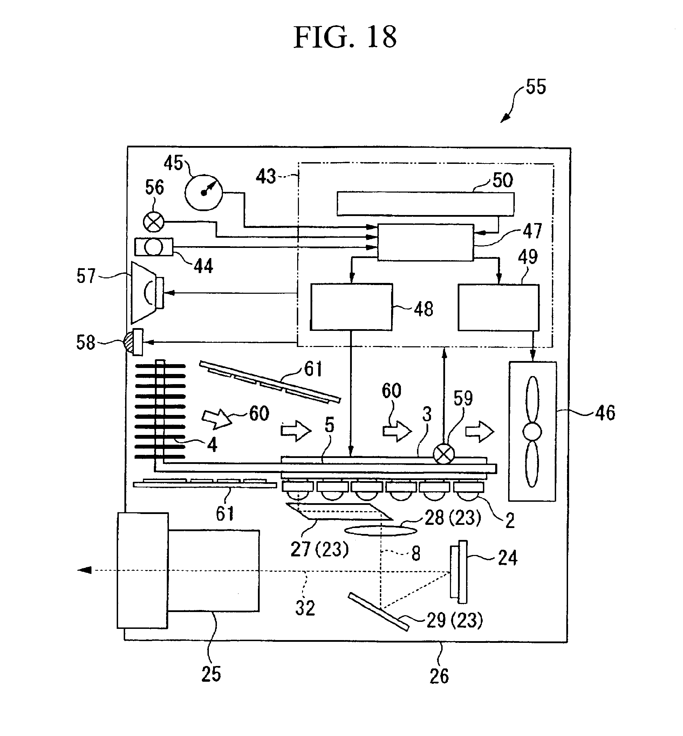

Fig. 18 shows a modification of this embodiment. A projector 55 of this modification includes a temperature sensor 56 which can measure the temperature inside the chassis 26 and which can input the measurement result thereof to the control unit 43; a speaker 57 which can audibly output the control result in the control unit 43; and an LED. The projector 55 of this modification also includes an indicator 58 which illuminates or flashes according to the above-mentioned control result of the control unit 43, a heat-absorption-part temperature sensor 59 which can measure the temperature of the heat-absorbing block 3 and input the measurement result thereof to the control unit 43, and a plurality of base plates 61 provided in a flow path of cool air 60 generated by the cooling unit 46. In this modification, the temperature conditions inside the chassis 26 and the temperature conditions of the heat-absorbing block 3 are measured, and the results thereof can be reflected in control of the light level Y of the light sources 2 and amount of radiated heat Z in the control unit 43. Doing so is advantageous in that it affords double protection of heat buildup in the light sources 2. In addition, the temperature inside the chassis 26 is checked with the temperature sensor 56, and the level of driving of the cooling unit 46 is regulated, thus allowing energy saving and noise reduction to be achieved. As a result of the control in the control unit 43, in the event of the light level of the light sources 2 becoming 0, and so forth, if it is necessary to warn the operator, it is possible to give an audible warning using the speaker 57 or a visual warning using the indicator 58. By providing the required plurality of base plates 61 for operating the projector 55 in the flow path of the cool air 60, the base plates 61 can also be made to radiate heat at the same time. Simultaneously, by making the base plates 61 also function as partition plates and guiding the air passing the heat-radiating plates to the heat-generating part again, it is possible to further cool the heat-generating part.

It was described that the zero light level Y in the computational expression 51 relating the change in tube-member tilt angle Δθ and the light level Y, in the calculation unit 47 corresponds to the tube-member tilt angle θ where it is difficult to transport heat by the heat-transporting means 5. However, before that, if the light level Y reaches a light level that is not sufficient for the illumination light of the projector, the light level at that time may be defined as zero. In addition, although the light level Y of the light sources 2 and the cooling level of the cooling unit 46 are controlled according to the variation of the tube-member tilt angle θ, the variation of the light level Y and cooling level need not be performed simultaneously. For example, if the tube-member tilt angle θ becomes large and the amount of heat transported increases, by making the change in light level Y later than the increase in cooling level, it is possible to keep the heat buildup in the light sources 2 on the safe side. If the tube-member tilt angle θ decreases, it is possible to keep the heat buildup in the light sources 2 on the safe side if the change in cooling level is performed later than the change in light level Y.

Embodiments of the present invention have been described with reference to the drawings, but the specific configurations are not limited to these embodiments; various modifications are also included so long as they do not depart from the spirit of the invention.
For example, although an example is given in which block-shaped heat-absorbing blocks serve as the heat-absorbing members, they are not limited thereto; it is also possible to use substantially plate-shaped members.

## Claims

1. A light source apparatus for illuminating an illumination area via an illumination optical part, comprising:
a plurality of light sources for emitting illumination light;
one heat-absorbing member for absorbing heat which the plurality of light sources generates;
a heat-radiating part for radiating the heat; and
a heat-transporting part thermally connected to the heat-absorbing member and the heat-radiating part;
wherein the heat-transporting part includes a tube member containing a refrigerant for transmitting the heat and is provided at a position shifted from an irradiation position of the illumination light.

2. A light source apparatus according to Claim 1, wherein the heat-transporting part is a heat pipe.

3. A projector using the light source apparatus according to Claim 1, comprising:
an illumination optical part which optically acts on the illumination light so that the illumination light emitted from the light sources of the light source apparatus illuminates the illumination area;
an image modulation device which is disposed at the illumination area and which modulates the illumination light irradiating the illumination area according to an input image signal and outputs modulated light; and
a projection optical part for projecting the modulate light output from the image modulation device onto the illumination area as an image.

4. A projector according to Claim 3, wherein the heat-radiating part of the light source apparatus is positioned further frontward than the heat-absorbing member of the light source apparatus and is provided such that, when mounted to a flat mounting surface such as a table or floor, the tube member of the heat-transporting part of the light source apparatus is parallel to the mounting surface, or, a distance between a heat-radiating end of the tube member and the mounting surface is larger than a distance between a heat-absorbing end of the tube member and the mounting surface.

5. A projector according to Claim 3, wherein the heat-radiating part of the light source apparatus is positioned further rearward than the heat-absorbing member of the light source apparatus, and is disposed such that, when suspended from a flat suspension surface such as a ceiling, the tube member of the heat-transporting part of the light source apparatus is parallel to the suspension surface, or, a distance between a heat-radiating end of the tube member and the suspension surface is smaller than a distance between a heat-absorbing end of the tube member and the suspension surface.

6. A projector according to Claim 3, wherein an optical axis, which is a center line of the projection optical part, and the tube member of the heat-transporting part of the light source apparatus are substantially orthogonal in plan view.

7. A projector according to Claim 3, wherein the heat-radiating part of the light source apparatus is positioned above an optical axis which is a center line of the projection optical part.

8. A projector according to Claim 3, further comprising:
a tube member tilt angle detecting part for detecting a tube-member tilt angle, which is a tilt angle of the tube member of the heat-transporting part of the light source apparatus; and
a light-level controlling part for controlling the light level that the light sources of the light source apparatus emit, on the basis of the tube-member tilt angle measured by the tube-member tilt-angle detecting part.

9. A projector according to Claim 8, further comprising:
a computing part including a computational expression relating a change in the tube-member tilt angle and the light level, for calculating the light level corresponding to an amount of generated heat which can be radiated, with the tube-member tilt angle measured by the tube-member tilt-angle detecting part serving as a parameter,
wherein the light-level controlling part controls the light level which the light sources emit on the basis of the light level calculated by the computing part.

10. A projector according to Claim 9, further comprising:
a time measuring part for measuring elapsed time from when the tube-member tilt angle measured by the tube-member tilt-angle detecting part changes,
wherein the light-level controlling part controls the light level which the light sources emit according to the elapsed time measured by the time measuring part.

11. A projector according to Claim 10, further comprising:
an allowable-heat-buildup setting part for setting an allowable heat buildup of the light sources,
wherein the computing part
calculates a heat-buildup factor, which is a difference between an amount of generated heat and an amount of radiated heat per unit time, with the tube-member tilt angle and the light level serving as parameters,
calculates a total heat buildup by calculating a sum of products of the heat buildup factor and the elapsed time output from the time measuring part, and
compares the total heat buildup and the allowable heat buildup output from the allowable-heat-buildup setting part, and
wherein the light-level controlling part controls the light level which the light sources emit according to a size comparison result of the total heat buildup and the allowable heat buildup.

12. A projector according to Claim 3, further comprising a cooling part which is capable of changing a cooling level.

13. A projector according to Claim 12, wherein the cooling part is a cooling fan.

14. A projector according to Claim 12, further comprising:
a tube-member tilt-angle detecting part for detecting a tube-member tilt angle, which is a tilt angle of the tube member of the heat-transporting part of the light source apparatus; and
a cooling-level controlling part for determining the cooling level of the cooling part on the basis of the tube-member tilt angle measured by the tube-member tilt-angle detecting part.
